# EUROPEAN PATENT APPLICATION

(11) **EP 4 691 592 A1**
(43) Date of publication of application: **11.02.2026**
(21) Application number: 24780206.9
(22) Date of filing: 25.03.2024
(51) Int. Cl.: B01D 39/00, G01B 11/02, G06N 20/00

(54) **METHOD FOR EVALUATING PLEAT SHAPE AND METHOD FOR MANUFACTURING PLEAT BODY**

(30) Priority: 31.03.2023 JP 2023058792
(71) Applicant: Daikin Industries, Ltd., Osaka-shi, Osaka 530-0001 (JP); Nippon Muki Co., Ltd., Taitou-ku Tokyo 110-0015 (JP)
(72) Inventor: SUGANOSAWA, Hiroto, Osaka-shi, Osaka 530-001 (JP); OKABE, Shingo, Osaka-shi, Osaka 530-001 (JP); KIMURA, Erika, Osaka-shi, Osaka 530-001 (JP); KOSHIMURA, Taichi, Taitou-ku, Tokyo 110-0015 (JP)
(74) Representative: Conti, Marco
(86) International application number: PCT/JP2024/011748
(87) International publication number: WO 2024/204089

(57) **Abstract**

There are provided a method for evaluating a pleat shape capable of objectively evaluating a pleat shape of a pleated body, and a method for manufacturing a pleated body. A method for evaluating a pleat shape of a pleated body (20) obtained by machining a sheet-shaped material (30) into a pleat shape includes an extraction step of extracting a feature amount related to the pleat shape from image data (56) of the pleated body (20), and an evaluation step of evaluating the pleat shape based on the feature amount extracted in the extraction step.

## Description

### Technical Field

The present disclosure relates to a method for evaluating a pleat shape and a method for manufacturing a pleated body.

### Background Art

In related art, for example, like a filter medium described in PTL 1 (Japanese Unexamined Patent Application Publication No. 2016-026870), a pleated body in which a sheet-shaped material is machined into a pleat shape and is used has been known.

Such a pleated body is desired to be machined into an intended pleat shape by a machining device for the purpose of exhibiting a desired function or the like.

### Disclosure of Invention

### Technical Problem

However, in order to machine a sheet-shaped material into a pleated body having an intended shape, it may be necessary to adjust manufacturing conditions corresponding to a material and physical properties of the sheet-shaped material, setting conditions of the machining device, and a use environment, and in a present situation, the adjustment depends on the ability to adjust the manufacturing conditions based on a sense of a skilled person who visually observes the pleat shape.

Thus, it is desired to objectively evaluate the pleat shape of the pleated body.

### Solution to Problem

An evaluation method according to a first aspect is a method for evaluating a pleat shape of a pleated body obtained by machining a sheet-shaped material into a pleat shape, and includes an extraction step and an evaluation step. In the extraction step, a feature amount related to the pleat shape is extracted from the image data of the pleated body. In the evaluation step, the pleat shape is evaluated based on the feature amount extracted in the extraction step.

According to this evaluation method, the pleat shape of the pleated body can be objectively evaluated.

An evaluation method according to a second aspect is the evaluation method according to the first aspect, and the pleated body is a filter medium.

In this evaluation method, since the pleat shape of the filter medium can be objectively evaluated, the performance of the filter medium can also be objectively evaluated.

An evaluation method according to a third aspect is the evaluation method of the first aspect or the second aspect, and the evaluation step includes a step of comparing the feature amount extracted in the extraction step with a predetermined reference.

In this evaluation method, it is possible to grasp whether or not the pleat shape of the pleated body satisfies the predetermined reference.

An evaluation method according to a fourth aspect is the evaluation method according to any one of the first aspect to the third aspect, and the feature amount is any one of a pleat pitch, a pleat height, a length of each of coupling portions, in a second direction, that couple mountains and valleys adjacent to each other as viewed in a first direction, a bending degree of each of the coupling portions as viewed in the first direction, symmetry between the coupling portions adjacent to each other as viewed in the first direction, a length and a width of an interval holding portion in a case where the interval holding portion for holding a pleat interval is provided in the pleated body, and a combination thereof. The first direction is a direction in which a folding line extends. The second direction is a direction in which the pleat shape continues. A third direction is a direction perpendicular to both the first direction and the second direction.

This evaluation method can enhance the objectivity of the evaluation of the pleat shape.

An evaluation method according to a fifth aspect is the evaluation method according to any of the first aspect to the fourth aspect, and further includes an evaluation model learning step. In the evaluation model learning step, an evaluation model is created by performing machine learning of a relationship between the image data of the pleated body and evaluated data by using a plurality of sets of pieces of the image data of the pleated body and pieces of the evaluated data associated with the image data of the pleated body. In the evaluation step, the feature amount extracted in the extraction step is evaluated based on the evaluation model created in the evaluation model learning step.

According to this evaluation method, the objectivity of the evaluation result is enhanced.

An evaluation method according to a sixth aspect is the evaluation method according to any of the first aspect to the fifth aspect, and further includes an input condition learning step. In the input condition learning step, a relationship between the input condition and the evaluation result data is learned by using a plurality of sets of the input conditions and pieces of the evaluation result data. The input condition includes machining condition data input to a machining device for machining the sheet-shaped material into the pleat shape and physical property data related to the sheet-shaped material. The evaluation result data is data obtained by evaluating the pleated body obtained to correspond to the input condition in the evaluation step.

According to this evaluation method, the objectivity of the evaluation result is further enhanced.

An evaluation method according to a seventh aspect is the evaluation method according to the sixth aspect, and the machining condition data includes any one of an interval amount between a folding blade and a folding plate included in the machining device, a conveyance speed when the machining device conveys the material, an application amount in a case where resin for forming an interval holding portion is applied to the material, and a combination thereof.

According to this evaluation method, the objectivity of the evaluation result is further enhanced.

An evaluation method according to an eighth aspect is the evaluation method according to the sixth aspect or the seventh aspect, and an output device is caused to output the input condition, based on a model obtained in the input condition learning step.

According to this evaluation method, it is possible to grasp the input condition based on the objective evaluation.

In a manufacturing method according to a ninth aspect, the pleated body is manufactured by using the input condition output in the evaluation method of the eighth aspect.

In this manufacturing method, an intended pleat shape is easily realized in the manufactured pleated body.

### Brief Description of Drawings

[Fig. 1] Fig. 1 is a schematic external perspective view of an example of a pleated body.
[Fig. 2] Fig. 2 is a schematic external perspective view of an example of the pleated body in which an interval holding portion is provided.
[Fig. 3] Fig. 3 is a diagram illustrating a pleat shape of the pleated body as viewed in a first direction.
[Fig. 4] Fig. 4 is a sectional view of an example of a sheet-shaped material.
[Fig. 5] Fig. 5 is an external perspective view of an air filter unit.
[Fig. 6] Fig. 6 is a schematic view of an apparatus used for stretching the sheet-shaped material.
[Fig. 7] Fig. 7 is a diagram schematically illustrating an apparatus (left half) used for stretching the sheet-shaped material in a width direction and an apparatus (right half) for laminating an air-permeable support material on the sheet-shaped material.
[Fig. 8] Fig. 8 is a schematic view of a reciprocating folder.
[Fig. 9] Fig. 9 is a schematic view illustrating an apparatus used for application of the interval holding portion and a re-pleating step.
[Fig. 10] Fig. 10 is a diagram illustrating a state where a folding blade is retracted in the re-pleating step.
[Fig. 11] Fig. 11 is a diagram illustrating a state where the folding blade is moved to a folding position in the re-pleating step.
[Fig. 12] Fig. 12 is a system configuration diagram of an example of a camera and an evaluation information processing apparatus.
[Fig. 13] Fig. 13 is a flow chart of evaluation processing by the evaluation information processing apparatus.
[Fig. 14] Fig. 14 is a system configuration diagram of another example of the camera and an evaluation information processing apparatus.
[Fig. 15] Fig. 15 is a flow chart of the evaluation processing performed by the evaluation information processing apparatus.
[Fig. 16] Fig. 16 is a system configuration diagram of an example of a machining device, the camera, and the evaluation information processing apparatus.
[Fig. 17] Fig. 17 is a flow chart of processing of manufacturing the pleated body.
[Fig. 18] Fig. 18 is a side view photograph of the pleated body obtained in a case where an interval between the folding blade and the folding plate is changed.

### Description of Embodiments

### (1) Method for evaluating pleat shape

In a method for evaluating a pleat shape, a pleat shape of a pleated body obtained by machining a sheet-shaped material into a pleat shape is evaluated. The evaluation method includes an extraction step and an evaluation step. In the extraction step, a feature amount related to the pleat shape is extracted from image data of the pleated body. In the evaluation step, the pleat shape is evaluated based on the feature amount extracted in the extraction step. Accordingly, it is possible to objectively evaluate the pleat shape of the pleated body without depending on the evaluation of the pleat shape by the visual recognition of a skilled person.

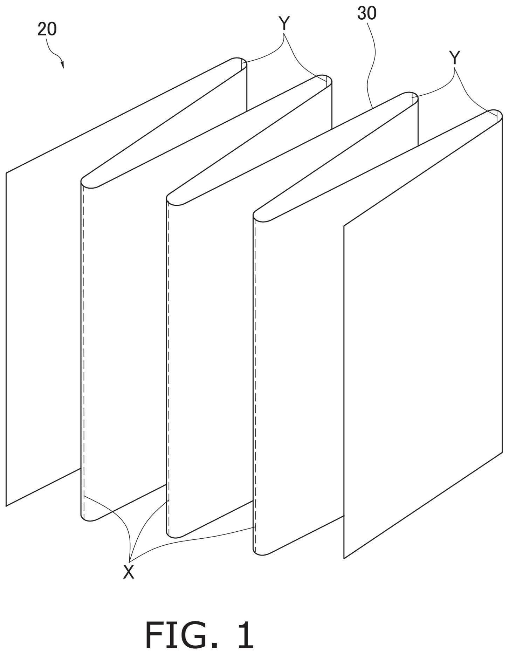

For example, as illustrated in Fig. 1 which is a schematic external perspective view of an example of a pleated body 20, the pleat shape of the pleated body may be a shape in which a plurality of mountain folding lines X and a plurality of valley folding lines Y are folded so as to be arranged in parallel to each other by repeatedly folding a sheet-shaped material 30 into mountain fold and valley fold. A straight line orthogonal to each of the plurality of mountain folding lines X and a straight line orthogonal to each of the plurality of valley folding lines Y may be parallel to each other.

The method for acquiring the image data of the pleated body is not limited. For example, the image data may be obtained by capturing the pleated body from a direction in which the mountain folding lines and the valley folding lines extend. The image data of the pleated body is not limited. For example, the image data may be framed such that three or more and 30 or less pairs of mountains and valleys are imaged by a camera. In the image acquisition of the pleated body by the camera from a predetermined position, it is preferable to capture the pleated body at predetermined time intervals such that a predetermined number of pairs of mountains and valleys move as the pleated body is conveyed in a conveying direction.

### (2) Extraction step

In the extraction step, a feature amount related to the pleat shape is extracted from the image data of the pleated body. For example, the extraction processing is preferably performed by using an information processing apparatus such as a computer including a processor such as a central processing unit (CPU) or a graphics processing unit (GPU) and a memory such as a RAM or a ROM.

### (2-1) Feature amount of pleat shape

The feature amount related to the pleat shape may be, for example, a numerical value of a shape of an edge portion of a curved line or a straight line seen in a case where the pleat shape is viewed from the direction in which the mountain folding lines and the valley folding lines extend, and may include only one feature amount or may include a plurality of feature amounts. Accordingly, the objectivity of the evaluation of the pleat shape can be enhanced.

More specifically, the feature amount is, for example, any one of a pleat pitch, a pleat height, a length of each of coupling portions in a second direction that couple the mountains and valleys adjacent to each other as viewed in a first direction, a bending degree of each of the coupling portions as viewed in the first direction, symmetry between the coupling portions adjacent to each other as viewed in the first direction, a length and a width of an interval holding portion in a case where the interval holding portion for holding a pleat interval is provided in the pleated body, and a combination thereof. The first direction is the direction in which the plurality of mountain folding lines X and the plurality of valley folding lines Y extend. The second direction is a direction in which the pleat shape is continuous, and can also be referred to as a direction in which the plurality of mountain folding lines X are arranged or a direction in which the plurality of valley folding lines Y are arranged. A third direction is a direction perpendicular to both the first direction and the second direction. In the case of a filter medium having a pleat shape, the third direction can also be referred to as a direction in which a fluid to be treated is caused to pass.

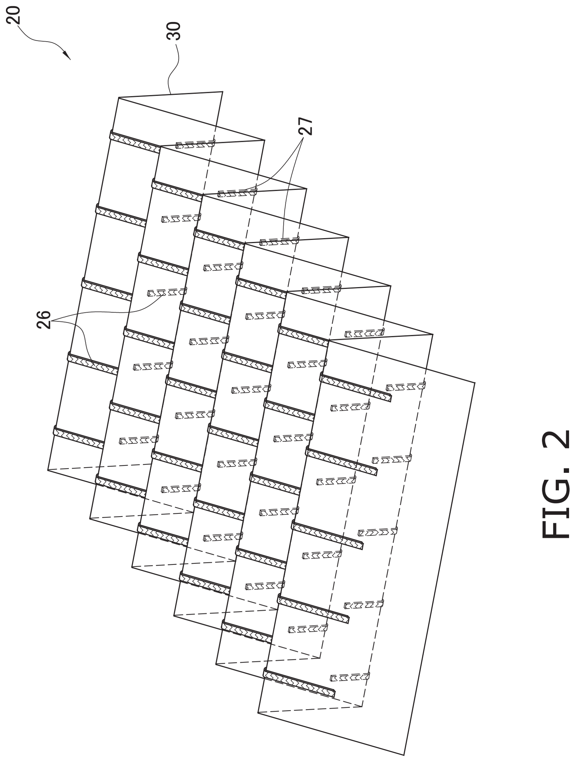

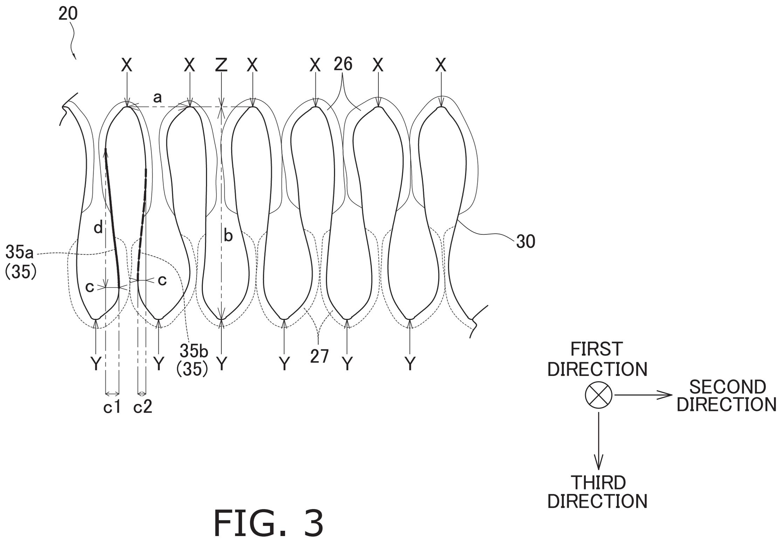

As illustrated in a schematic external perspective view of Fig. 2, one or both of mountain interval holding portions 26 for holding intervals between mountain portions adjacent to each other and valley interval holding portions 27 for holding intervals between valley portions adjacent to each other may be provided in the pleated body. The interval holding portions such as the mountain interval holding portions 26 and the valley interval holding portions 27 are optional, and a position, shape, thickness, and the like provided in the pleated body are also appropriately selected. Fig. 2 illustrates a state where a folding interval of the pleated body 20 in which the interval holding portions are provided is slightly widened. As illustrated in Fig. 3 which is a sectional view seen from a folding line direction, the mountain interval holding portion 26 has a function of holding an interval such that opposing surfaces of mountain portions adjacent to each other do not come into contact with each other, and the valley interval holding portion 27 has a function of holding an interval such that opposing surfaces of valley portions adjacent to each other do not come into contact with each other. In Fig. 3, a depth direction of a paper surface is the first direction, a left-right direction of the paper surface is the second direction, and an upper-lower direction of the paper surface is the third direction. In Fig. 3, as an example of the interval holding portion, the mountain interval holding portion 26 is provided outside the mountain folding line X in the third direction, and the valley interval holding portion 27 is provided outside the valley folding line Y in the third direction.

Hereinafter, a parameter of the feature amount will be described with reference to Fig. 3.

A pleat pitch a refers to a length between the mountain folding lines X adjacent to each other in the second direction, and can also be referred to as a length between the plurality of valley folding lines Y in the second direction. The mountain folding line X refers to an end portion of the mountain portion in the third direction. The valley folding line Y refers to an end portion of the valley portion in the third direction. Instead of the pleat pitch a, a value obtained by subtracting a thickness of a sheet from the pleat pitch a may be used as the parameter.

A pleat height b is a length in the third direction between the valley folding line Y and an intersection point Z of a line connecting the mountain folding lines X adjacent to each other and a line extending in the third direction from the valley folding line Y between the mountain folding lines X adjacent to each other. The pleat height b is a length in the third direction between the mountain folding line X and an intersection point Z of a line connecting the valley folding lines Y adjacent to each other and a line extending in the third direction from the mountain folding line X between the valley folding lines Y adjacent to each other.

Lengths c of coupling portions 35 in the second direction that couple mountains and valleys adjacent to each other as viewed in the first direction refer to lengths (c1), in the second direction, of portions undulating to a rightmost side on a valley side and portions undulating to a leftmost side on a mountain side, among coupling portions 35a that couple the valleys and the mountains adjacent on the right side thereof in Fig. 3. The lengths c of the coupling portions 35 in the second direction that couple mountains and valleys adjacent to each other as viewed in the first direction refer to lengths (c2), in the second direction, of portions undulating to a rightmost side on a mountain side and portions undulating to a leftmost side on a valley side, among coupling portions 35b that couple the mountains and the valleys adjacent on the right side thereof in Fig. 3. In Fig. 3, the right side can be referred to as one side in the second direction, and the left side can be referred to as the other side in the second direction.

The bending degree of the coupling portion as viewed in the first direction is not limited, and may be, for example, a ratio (c/d) of the length c of the coupling portion in the second direction to a length d of the coupling portion in the third direction. It can be evaluated that the larger a value of the ratio is, the larger the bending degree is. For example, in a case where the pleated body is the filter medium, it can be evaluated that the larger the value of the ratio (c/d) is, the larger the bending degree is, the narrower a flow path for causing a fluid to pass is, and the smaller an effective surface area is, resulting in an increase in pressure loss.

The symmetry between the coupling portions adjacent to each other as viewed in the first direction is not limited, and may be, for example, a difference in the bending degree between the coupling portions adjacent to each other. More specifically, for example, the difference may be a difference in the ratio (c/d) between the coupling portions adjacent to each other.

The length of the interval holding portion in a case where the interval holding portion for holding the pleat interval is provided in the pleated body may be a length of a portion extending in a direction intersecting with the mountain folding line X or the valley folding line Y. Instead of the length, for example, a ratio of the length of the interval holding portion in the third direction to the pleat height b may be used.

A width of the interval holding portion in a case where the interval holding portion for holding the pleat interval is provided in the pleated body may be a length in the first direction which is a direction parallel to the mountain folding line X or the valley folding line Y.

In a case where the interval holding portions for holding the pleat intervals are provided in the pleated body at the predetermined intervals in the first direction, the interval in the first direction may be further used as the feature amount.

### (3) Evaluation step

In the evaluation step, the pleat shape is evaluated based on the feature amount extracted in the extraction step. In this evaluation processing, for example, extraction is preferably performed by using an evaluation information processing apparatus such as a computer including a processor such as a central processing unit (CPU) or a graphics processing unit (GPU) that performs various kinds of information processing and a memory such as a RAM or a ROM.

The evaluation step preferably includes, for example, a step of comparing the feature amount extracted in the extraction step with a predetermined reference. Accordingly, it is possible to grasp whether or not the pleat shape of the pleated body satisfies a predetermined reference.

The predetermined reference may be provided for every feature amount described above, or may be defined by a mathematical expression using at least two or more feature amounts described above.

A method for determining the predetermined reference is not limited, and for example, the predetermined reference may be a reference for guaranteeing that the pleat shape of the obtained pleated body satisfies a desired condition.

For example, in a case where the pleated body is a filter medium, the predetermined reference may be set such that the pressure loss in a case where the fluid to be treated is caused to pass through the obtained pleated body satisfies the predetermined condition.

### (4) Use of pleated body

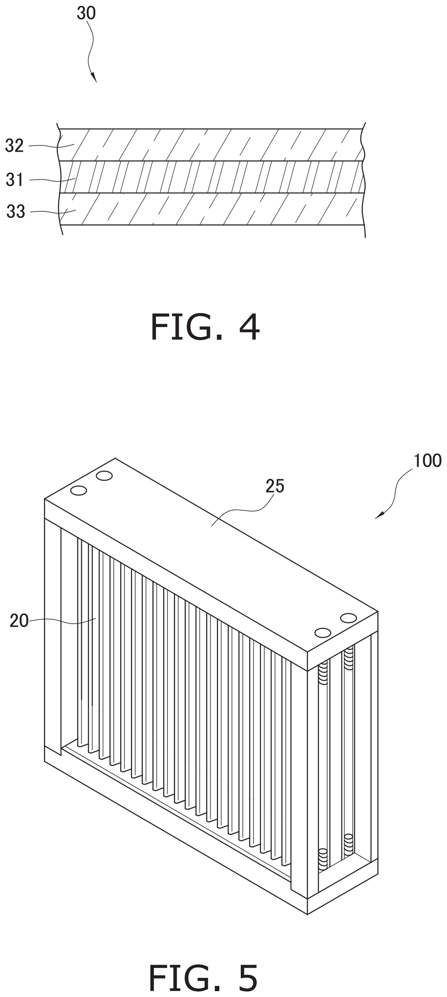

The sheet-shaped material 30 machined into a pleat shape is not limited, and examples thereof include a filter medium and an adsorbent. Such a filter medium or adsorbent may include a plurality of layers. For example, as illustrated in the sectional view of Fig. 4, the filter medium may include a main collection layer 31, a first support layer 32 laminated on one side of the main collection layer 31, and a second support layer 33 laminated on the other side of the main collection layer 31. The filter medium may have a support layer laminated only on one side or the other side of the main collection layer 31 in a direction in which the fluid to be treated is caused to pass.

The filter medium may be an air filter medium in which the fluid to be treated is a gas, a filter medium in which the fluid to be treated is a liquid, a filter medium in which the fluid to be treated is a powder, or the fluid to be treated is a mixture of at least two or more of a gas, a liquid, and a powder.

Examples of the filter medium include a filter medium made of glass fibers, a filter medium made of organic fibers, and a filter medium including nanofibers. Examples of the filter medium made of organic fiber include a fluororesin porous membrane such as a porous membrane (hereinafter, referred to as PTFE porous film in some cases) made of polytetrafluoroethylene (hereinafter, referred to as PTFE in some cases). Since such a fluororesin porous membrane has a higher dust collection efficiency than the filter medium made of glass fiber when compared at the same pressure loss, the fluororesin porous membrane is particularly suitable for use in a high-efficiency particulate air filter (HEPA filter) or an ultra-low penetration air filter (ULPA filter).

In a case where the filter medium having the pleat shape is used by causing the fluid to be treated to pass in a direction intersecting with each of a plane on which the plurality of mountain folding lines X are positioned and a plane on which the plurality of valley folding lines Y are positioned, the pleat shape is deformed by receiving resistance, and thus, surfaces facing each other on a downstream side of the filter medium come into contact with each other. As a result, a passing resistance may increase, an effective filtration area may decrease, and performance may deteriorate. Since the deformation of the pleat shape easily occurs in a case where the uniformity of the pleat shape is low, the uniformity of the pleat shape of the obtained pleated body is required to be high. In this evaluation method, since the pleat shape of the filter medium can be objectively evaluated, the performance of the filter medium can also be objectively evaluated. It is also possible to estimate that the pleated body evaluated to have a non-defective pleat shape by this evaluation method has good performance of the filter medium.

### (5) Unit including pleated body

Next, a unit including the pleated body will be described with reference to Fig. 5.

A unit 100 including the pleated body includes the pleated body 20 described above and a frame body 25 that houses the pleated body 20.

The frame body 25 is formed, for example, by combining plate materials such as resin and metal, and a space between the pleated body 20 and the frame body 25 is preferably sealed with a sealing agent. The sealing agent is for preventing leakage between the pleated body 20 and the frame body 25, and is made of, for example, a resin such as an epoxy resin, an acrylic resin, or a urethane resin.

### (6) Method for manufacturing filter medium

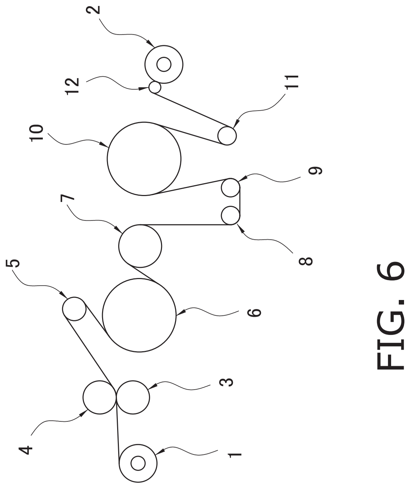

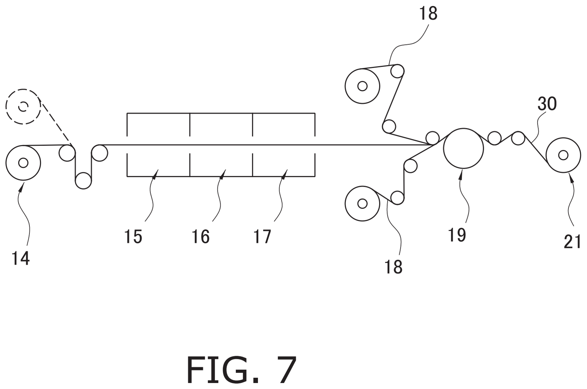

Figs. 6 and 7 illustrate an outline of an example of a method for manufacturing the filter medium as an example of the sheet-shaped material. The PTFE porous membrane, which is an example of the fluororesin porous membrane, will be described as an example.

In Fig. 6, reference sign 1 denotes an unwinding roll, reference sign 2 denotes a winding roll, reference signs 3 to 5 denote rolls, reference signs 6 and 7 denote heat rolls, and reference signs 8 to 12 denote rolls. In Fig. 7, reference sign 14 denotes an unwinding roll, reference sign 15 denotes a preheating zone, reference sign 16 denotes a stretching zone, reference sign 17 denotes a heat-setting zone, reference sign 19 denotes a lamination roll, and reference sign 21 denotes a winding roll.

In the porous membrane production step, the PTFE porous membrane is produced by biaxially stretching a PTFE unfired film through the step illustrated in Fig. 6 and the step illustrated in the left half of Fig. 7. Since such a fluororesin porous membrane is thin and soft, the fluororesin porous membrane is supported by stacking a support material in the following step.

In a thermal lamination step, an air-permeable support material 18 made of a nonwoven fabric is thermally laminated on both sides of the PTFE porous membrane by the step illustrated in the right half of Fig. 7 to obtain the sheet-shaped material 30 which is the filter medium.

In a winding step, the sheet-shaped material 30 which is the filter medium is wound around the winding roll 21.

The filter medium is preferably a medium that can be used as a HEPA filter, a ULPA filter, or a medium-efficiency-penetration-air-filter. These filter media using the fluororesin porous membrane have a very fine fiber diameter, a fine fiber structure, and a small membrane thickness. A membrane thickness of the fluororesin porous membrane may be, for example, equal to or larger than 1 µm and equal to or smaller than 100 µm. From the viewpoint of reducing the pressure loss, the membrane thickness is preferably equal to or larger than 1 µm and equal to or smaller than 50 µm, and more preferably equal to or larger than 1 µm and equal to or smaller than 30 µm. An average fiber diameter of the fluororesin porous membrane may be, for example, equal to or larger than 0.01 µm and equal to or smaller than 0.25 µm, and is preferably equal to or larger than 0.05 µm and equal to or smaller than 0.2 µm. The average fiber diameter may be calculated as a number average fiber diameter by randomly selecting 50 fibers from an image of a scanning electron micrograph.

### (7) Method for manufacturing pleated body

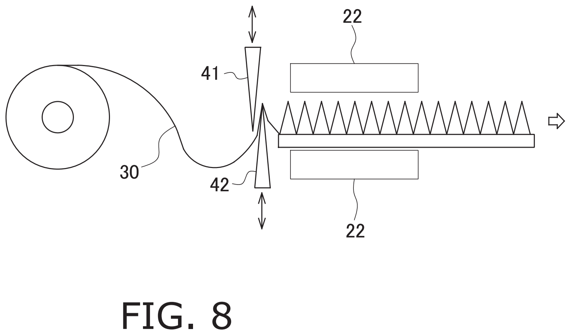

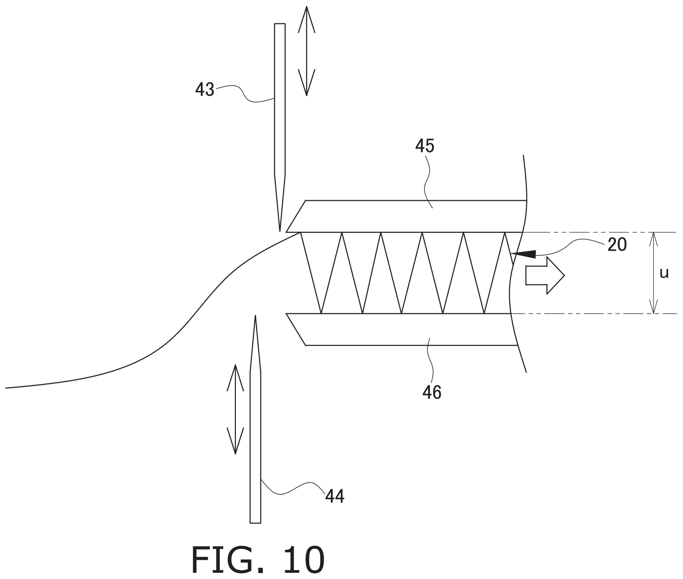

Figs. 8 and 10 illustrate an outline of an example of a method for manufacturing the pleated body 20.

In the method for manufacturing the pleated body, an unwinding step, a pleating step, a spreading step, an interval-holding-portion applying step, and a re-pleating step are performed.

In the unwinding step, the sheet-shaped material 30 wound around the winding roll 21 in the winding step is unwound. The material 30 wound around the winding roll 21 may have a winding tendency. As a place of the winding roll 21 has a shorter radius, a curvature of the winding roll 21 is larger. Accordingly, the winding tendency tends to increase.

In the pleating step, as illustrated in Fig. 8, due to the use of a pair of upper folding blade 41 and lower folding blade 42 of a machining device, the sheet-shaped material 30 is alternately folded back and machined into a corrugated shape (pleated) to form a corrugated folding line. The machining device folds the material 30 by the upper folding blade 41 and the lower folding blade 42 while feeding the sheet-shaped material 30 to a folding place between the upper folding blade 41 and the lower folding blade 42. Thus, the material 30 is folded by the upper folding blade 41 and the lower folding blade 42 in a state where force acts on the material 30 in a conveying direction. The machining device can adjust a conveyance speed of the material 30 by receiving a setting input or the like. Thereafter, the material 30 machined into the corrugated shape is heated by a heater 22 to have a folding tendency.

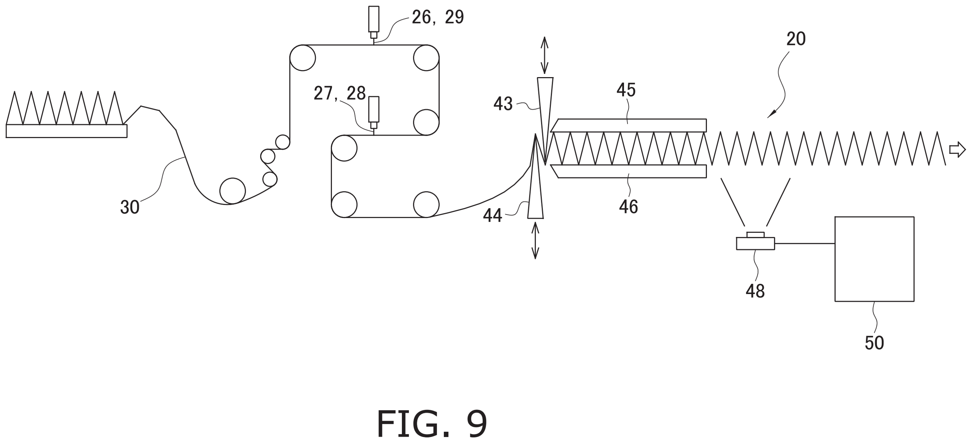

In the spreading step, as illustrated in Fig. 9, the pleated material 30 is spread into the sheet shape.

In the interval-holding-portion applying step, as illustrated in Fig. 9, the machining device applies a material such as resin for forming the interval holding portions such as the mountain interval holding portions 26 and 28 and the valley interval holding portions 27 and 29 to the spread material 30. The application of the interval holding portions is performed by, for example, applying resin in a molten state from nozzles arranged at predetermined intervals in a direction orthogonal to both the conveying direction and a thickness direction of the material 30. The machining device can adjust an application amount of the interval holding portions by receiving the setting input or the like. Specifically, the application amount is adjusted by adjusting a discharge speed of the resin in the molten state with respect to the conveyance speed.

In the re-pleating step, the material 30 applied to the interval holding portions is pleated again by using the pair of upper folding blade 43 and lower folding blade 44 of the machining device to obtain the pleated body 20. The upper folding blade 43 and the lower folding blade 44 are formed in a comb-tooth shape so as not to interfere with the interval holding portions. Similarly to the pleating step described above, the machining device folds the material 30 by the upper folding blade 43 and the lower folding blade 44 while feeding the sheet-shaped material 30 to the folding place between the upper folding blade 43 and the lower folding blade 44. Thus, the material 30 is folded by the upper folding blade 43 and the lower folding blade 44 in a state where force acts on the material 30 in the conveying direction. The machining device can adjust the conveyance speed of the material 30 by receiving the setting input or the like.

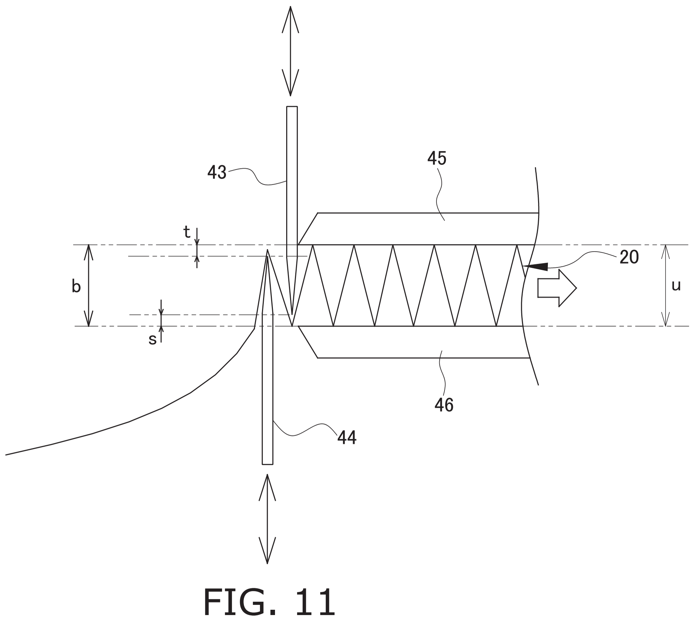

In the re-pleating step, as illustrated in Fig. 10, from a state where the material 30 is conveyed in the conveying direction while the upper folding blade 43 retracted upward and the lower folding blade 44 retracted downward, the upper folding blade 43 is lowered to a lower folding position and the lower folding blade 44 is raised to an upper folding position as illustrated in Fig. 11. Accordingly, the material 30 is machined into the pleat shape. Hereinafter, both the pleating step and the re-pleating step may be collectively referred to as pleating. As illustrated in Fig. 11, a pleating machine adjusts an interval u in the upper-lower direction between the upper folding plate 45 and the lower folding plate 46 so as to correspond to the pleat height b or a length larger than the pleat height b by a predetermined amount by receiving the setting input or the like. The pleating machine adjusts an interval s in the upper-lower direction when an upper surface of the lower folding plate 46 and a lower end of the upper folding blade 43 are closest to each other by receiving the setting input or the like. Similarly, the pleating machine adjusts an interval t in the upper-lower direction when a lower surface of the upper folding plate 45 and an upper end of the lower folding blade 44 are closest to each other by receiving the setting input or the like.

As described above, the pleating machine may change the shape of the obtained pleated body by adjusting the conveyance speed of the material 30, the interval s, the interval t, the application amount of the material such as the resin forming the interval holding portions, and the like. For example, when the conveyance speed of the material 30 changes, a pressure applied to the material 30 from the folding blades such as the upper folding blade 43 and the lower folding blade 44 changes, and a change in the length c of the coupling portion 35 in the second direction that couple the mountain and the valley adjacent to each other or a change in the pleat pitch a may occur, and the shape of the obtained pleated body may change. When the application amount of the material such as the resin forming the interval holding portions changes, the change in the pleat pitch a may occur, and the shape of the obtained pleated body may change. When the interval s or the interval t changes, the pressure applied to the material 30 from the folding blades such as the upper folding blade 43 or the lower folding blade 44 changes, a position in the material 30 folded by the folding blades changes, the change in the length c of the coupling portion 35 in the second direction that couples the mountain and the valley adjacent to each other or the change in the pleat pitch a may occur, and the shape of the obtained pleated body may change. In a case where the rigidity of the material 30 is large or in a case where a thickness of the material 30 is large, the shape of the pleated body to be obtained may change since the material does not easily have the folding tendency by pleating.

The image data of the pleated body is obtained, for example, by imaging the pleated body obtained through the re-pleating step with a camera 48.

### (8) Example of evaluation of pleat shape

Hereinafter, the pleated body used as the air filter medium will be described by taking, as an example, a case where the pleat shape is evaluated by using an evaluation information processing apparatus 50 and the camera 48 by using, as an index, an average value of the lengths c of the coupling portions in the second direction that couple the mountains and valleys adjacent to each other in one image as viewed in the first direction.

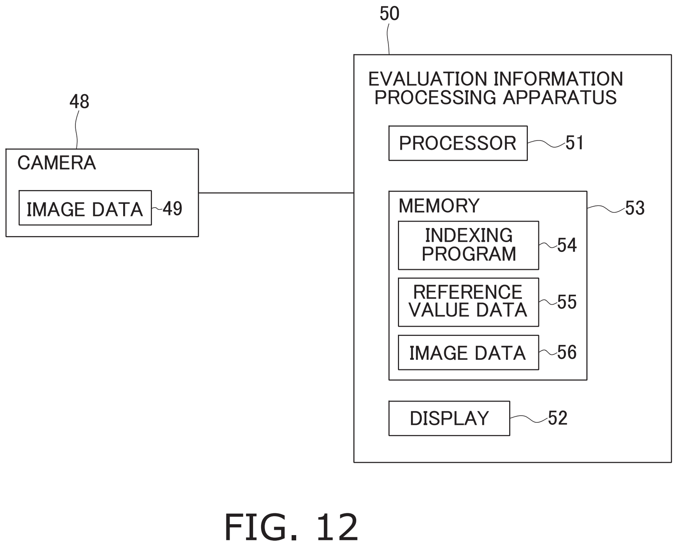

As illustrated in Fig. 9, the camera 48 is provided so as to image the pleated body in which the pleat shape is formed from an extending direction of the fold after the re-pleating step is finished. As illustrated in Fig. 12, the camera 48 records image data 49 of the imaged pleated body, and the image data 49 can be sent to the evaluation information processing apparatus 50 via a communication line.

The evaluation information processing apparatus 50 is an information processing apparatus such as a computer including a processor 51 such as a CPU or a graphics processing unit (GPU) that performs various kinds of information processing, a memory 53 including a RAM, a ROM, or the like, and a display 52 capable of displaying and outputting data. The image data 49 sent from the camera 48 is stored in the memory 53 as it is as image data 56. The memory 53 also stores an indexing program 54 for indexing the image data 56 and reference value data 55.

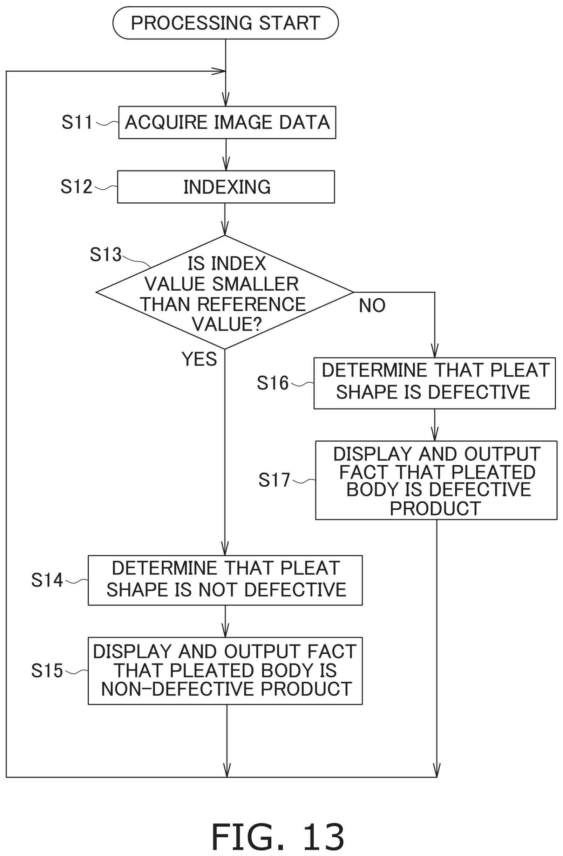

Fig. 13 is a flow chart of evaluation processing by the evaluation information processing apparatus 50 in the above-described configuration.

In step S11, the processor 51 stores, as the image data 56, the image data 49 transmitted from the camera 48 in the memory 53.

In step S12, the processor 51 calculates an index value which is a feature amount corresponding to the image data 56 by executing the indexing program 54 stored in the memory 53 for the image data 56 acquired in step S11. Specifically, an average value of the lengths c, in the second direction, of the plurality of coupling portions 35 (see Fig. 3) included in one image data 56 is calculated as the index value. Specifically, a value obtained by dividing the total of c1 and c2 illustrated in Fig. 3 in one image by the number of coupling portions 35 in one image is calculated as the index value.

In step S13, the processor 51 determines whether or not the index value calculated in step S12 is smaller than a reference value indicated by the reference value data stored in the memory 53. The processor 51 proceeds to step S14 in a case where it is determined that the index value is smaller than the reference value, and proceeds to step S16 in a case where it is determined that the index value is equal to or larger than the reference value.

In step S14, since the average value of the lengths c of the coupling portions 35 of the pleated body 20 in the second direction is smaller than the reference value, the processor 51 determines that the undulation is small and the pleat shape is not defective.

In step S15, the processor 51 outputs to display the fact that the pleated body is a non-defective product on the display 52, and proceeds to next image data acquisition processing.

In step S16, since the average value of the lengths c of the coupling portions 35 of the pleated body 20 in the second direction is equal to or larger than the reference value, the processor 51 determines that the undulation is large and the pleat shape is defective.

In step S17, the processor 51 outputs to display the fact that the pleated body is a defective product on the display 52, and proceeds to the next image data acquisition processing.

In the above-described processing, the reference value data 55 may be determined based on the index value of the pleated body 20 that is visually recognized as having a non-defective pleat shape, among already obtained pleated bodies 20. The reference value data 55 may be determined based on the index value of the pleated body 20 in which it is confirmed that a measured value of a predetermined pressure loss is lower than a predetermined value, among the already obtained pleated bodies 20.

### (9) Example of machine learning of evaluation method

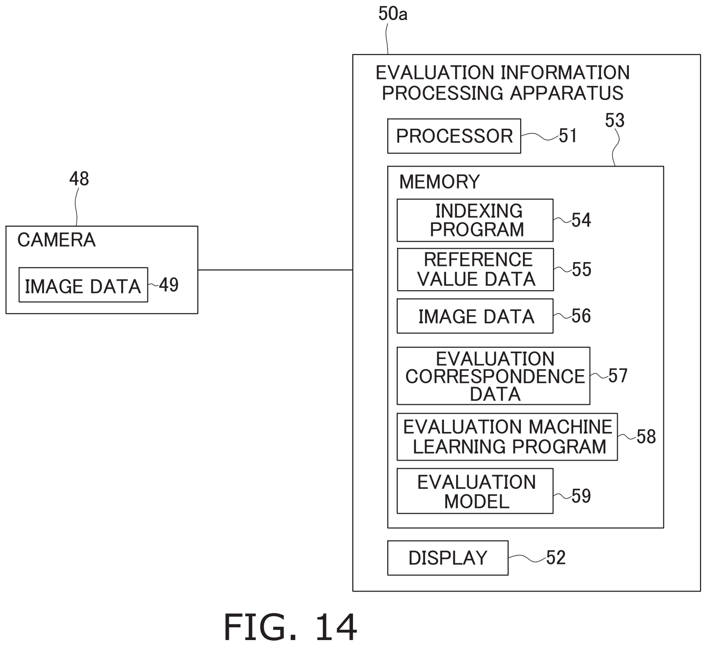

Hereinafter, the pleat shape of the pleated body used as the air filter medium will be described by taking, as an example, a case where the pleat shape is evaluated by machine learning by using an evaluation information processing apparatus 50a and the camera 48 having a configuration illustrated in Fig. 14 by using, as an index, an average value of the lengths c of the coupling portions in the second direction that couple the mountains and valleys adjacent to each other in one image as viewed in the first direction. The evaluation information processing apparatus 50a is different from the evaluation information processing apparatus 50 in that the evaluation information processing apparatus 50a stores an evaluation machine learning program 58 in the memory 53, stores evaluation correspondence data 57 in which an evaluation result and corresponding image data are associated with each other so as to be accumulated in the memory 53, and stores an evaluation model 59 obtained by machine learning in the memory 53.

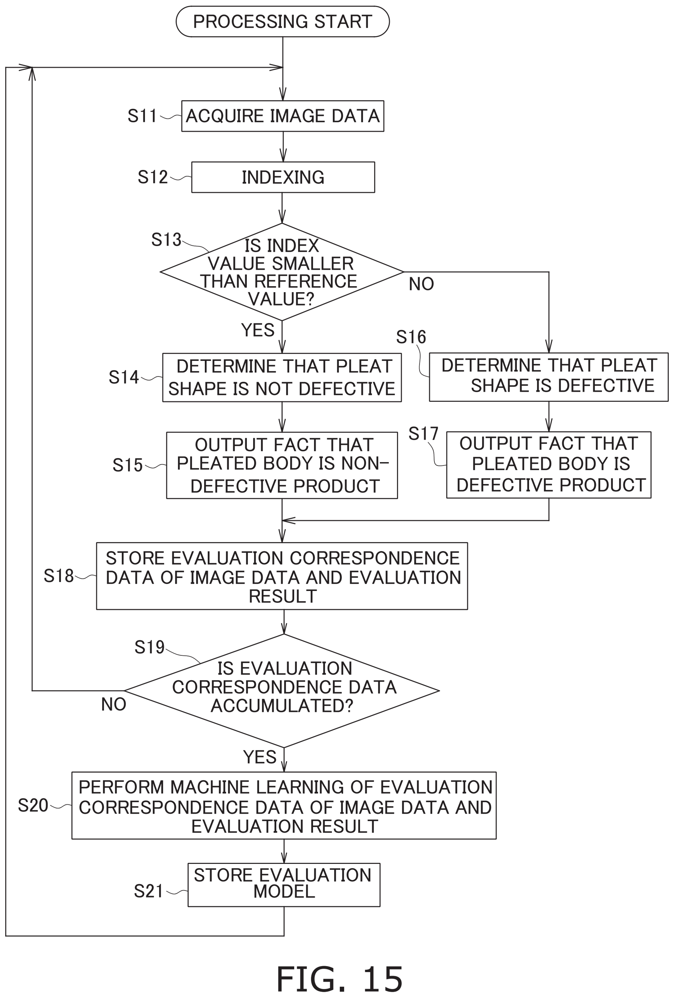

Fig. 15 is a flow chart of evaluation processing by the evaluation information processing apparatus 50a in the above-described configuration. Steps S11 to S15 and to Steps S16 to S17 are similar to the steps in the flow chart of evaluation processing by the evaluation information processing apparatus 50, and the description thereof will be omitted. After the processing of step S15 or S17 is finished, the processor 51 proceeds to step S18.

In step S18, the processor 51 stores, as the evaluation correspondence data 57, the evaluation result in step S15 in association with the corresponding image data in the memory 53. Similarly, the evaluation result in step S17 is stored as the evaluation correspondence data 57 in association with the corresponding image data in the memory 53.

In step S19, the processor 51 determines whether or not a predetermined amount or more of evaluation correspondence data 57 is accumulated. In a case where the accumulated amount of evaluation correspondence data 57 is less than the predetermined amount, the processor 51 returns to step S11 and the accumulation of the evaluation correspondence data 57 is continued. In a case where the accumulated amount of evaluation correspondence data 57 is the predetermined amount or more, the processor 51 proceeds to step S20.

In step S20, the processor 51 causes a neural network to perform machine learning by deep learning or the like by using a plurality of sets of pieces of data of image data and evaluation results included in the evaluation correspondence data 57, and obtains the evaluation model 59. An algorithm of machine learning is not limited to deep learning, and a known algorithm such as a support vector machine, a Gaussian process, a decision tree, or a random forest may be used.

In step S21, the processor 51 stores the evaluation model 59 obtained in step S20 in the memory 53. Accordingly, in the indexing in step S12, indexing using the evaluation model 59 stored in the memory 53 is performed, and evaluation is continued.

As described above, it is possible to objectively evaluate the pleat shape of the pleated body by indexing and evaluating the pleat shape of the pleated body by using the evaluation model 59 obtained by machine learning.

The machine learning is not limited. For example, the evaluation model 59 capable of performing new indexing may be obtained by extracting a feature common to image data of the pleated body determined as the non-defective product by machine learning. The reference value may be updated so as to correspond to a value indexed by the evaluation model 59. In this case, the evaluation of the pleat shape can be performed more objectively. Any one or a combination of the feature amounts described in "(2-1) Feature amount of pleat shape" described above may be used as the feature amount extracted from the image data mentioned here.

### (10) Information processing at time of manufacturing pleated body

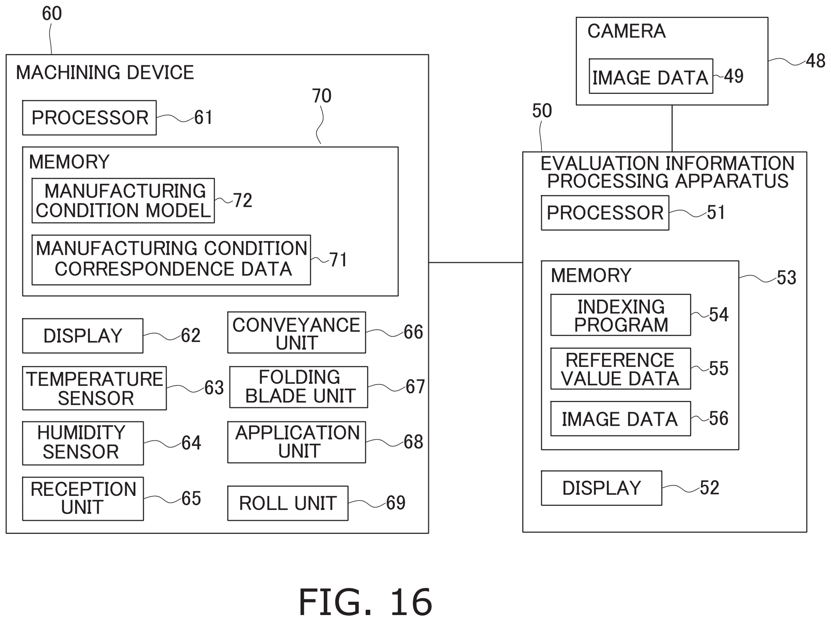

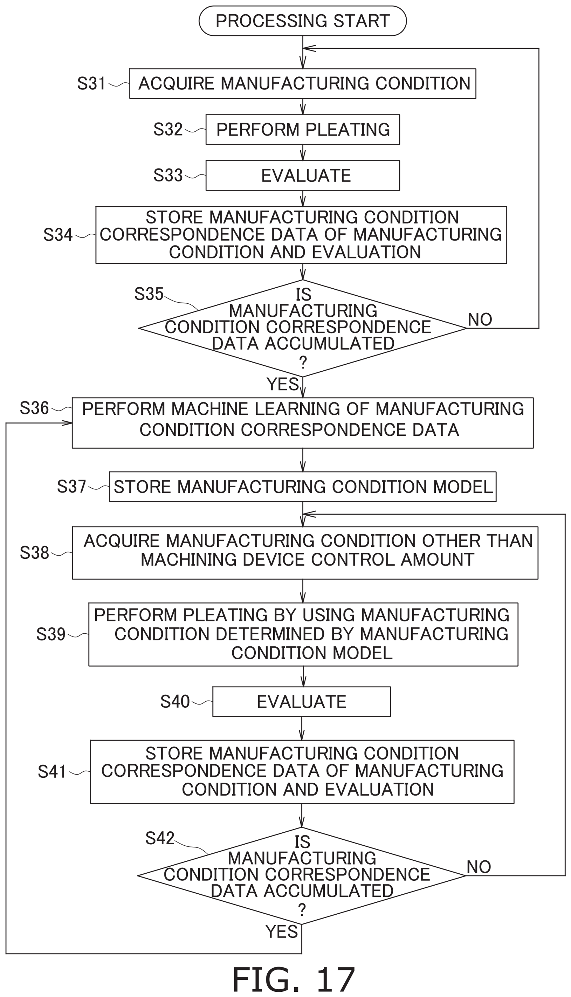

Hereinafter, information processing at the time of manufacturing the pleated body will be described with reference to a block diagram of Fig. 16 and a flow chart of Fig. 17 by using a machining device 60, the evaluation information processing apparatus 50, and the camera 48 as an example. The machining device 60, the evaluation information processing apparatus 50, and the camera 48 are connected to communicate with each other.

The machining device 60 includes a processor 61 such as a central processing unit (CPU) or a graphics processing unit (GPU) that performs various kinds of information processing, a memory 70 such as a RAM or a ROM, a display 62, a temperature sensor 63, a humidity sensor 64, a reception unit 65, a conveyance unit 66, a folding blade unit 67, an application unit 68, a roll unit 69, and the like.

The temperature sensor 63 is a sensor for grasping a temperature of a space where the pleating is performed.

The humidity sensor 64 is a sensor for grasping a humidity of the space where the pleating is performed.

The reception unit 65 receives input of various kinds of information. Inputs such as physical property data of the sheet-shaped material 30 as the filter medium to be machined, setting data of the interval u in the upper-lower direction between the upper folding plate 45 and the lower folding plate 46 corresponding to the pleat height b of the pleated body, setting data of the interval s in the upper-lower direction when the upper surface of the lower folding plate 46 and the lower end of the upper folding blade 43 are closest to each other, setting data of the interval t in the upper-lower direction when the lower surface of the upper folding plate 45 and the upper end of the lower folding blade 44 are closest to each other, setting data of the application amount of the interval holding portions, setting data of a rotational speed of each roller, and the like are received. Examples of the physical property data of the sheet-shaped material 30 include information indicating the rigidity of the material 30, information indicating the thickness of the material 30, information indicating a material constituting the material 30, information indicating a predetermined pressure loss of the material 30, information indicating a predetermined collection efficiency of the material 30, and information indicating an average fiber diameter in the main collection layer such as the fluororesin porous membrane of the material 30.

The conveyance unit 66 adjusts the rotational speed of each roller at the time of pleating.

The folding blade unit 67 adjusts the interval u in the upper-lower direction between the upper folding plate 45 and the lower folding plate 46 at the time of pleating, the interval s in the upper-lower direction when the upper surface of the lower folding plate 46 and the lower end of the upper folding blade 43 are closest to each other, the interval t in the upper-lower direction when the lower surface of the upper folding plate 45 and the upper end of the lower folding blade 44 are closest to each other, and the like based on reception information of the reception unit 65.

The application unit 68 adjusts the application amount of the interval holding portions at the time of pleating based on the reception information of the reception unit 65.

The roll unit 69 grasps information indicating a degree of winding tendency of each portion of the material 30 fed from the winding roll 21 at the time of pleating. For example, the roll unit 69 grasps that a portion positioned at a place with a smaller radius has a larger winding tendency by using information of a radius of the winding roll 21 at which the material 30 fed from the winding roll 21 is positioned. The determination of the degree of winding tendency is performed together with the feeding from the winding roll 21. The winding tendency may be grasped from a relationship between the entire length and the thickness of the material 30 instead of the information of the radius of the winding roll 21.

The display 62 displays and outputs information at the time of various kinds of control.

The processor 61 performs pleating by driving and controlling each portion of the machining device 60 so as to realize the setting data of the interval u in the upper-lower direction between the upper folding plate 45 and the lower folding plate 46 corresponding to the pleat height b of the pleated body, the setting data of the interval s in the upper-lower direction when the upper surface of the lower folding plate 46 and the lower end of the upper folding blade 43 are closest to each other, the setting data of the interval t in the upper-lower direction when the lower surface of the upper folding plate 45 and the upper end of the lower folding blade 44 are closest to each other, the setting data of the application amount of the interval holding portions, the setting data of the rotational speed of each roller, and the like, which are received by the reception unit 65.

At the time of pleating, manufacturing conditions such as the physical property data of the sheet-shaped material 30 to be machined, the information of the degree of winding tendency grasped by the roll unit 69, the temperature information grasped by the temperature sensor 63, the humidity information grasped by the humidity sensor 64, the setting data of the interval u in the upper-lower direction between the upper folding plate 45 and the lower folding plate 46, the setting data of the interval s in the upper-lower direction when the upper surface of the lower folding plate 46 and the lower end of the upper folding blade 43 are closest to each other, the setting data of the interval t in the upper-lower direction when the lower surface of the upper folding plate 45 and the upper end of the lower folding blade 44 are closest to each other, the setting data of the application amount of the interval holding portions, and the setting data of the rotational speed of each roller are grasped in real time, and the manufacturing conditions are stored in the memory 70 while being associated with the pleated body obtained under the manufacturing conditions. The specification of the correspondence is not limited, and the processor 61 may appropriately calculate and obtain the correspondence from the conveyance speed, a conveyance distance, a machining time, and the like.

Similarly to the above description, the obtained pleated body is evaluated by the evaluation information processing apparatus 50 by indexing while storing, in the memory 53, the image data 49 acquired by the camera 48 and transmitted as the image data 56. The evaluation result is transmitted from the evaluation information processing apparatus 50 to the machining device 60, and is stored in the memory 70 in association with the corresponding manufacturing condition, as manufacturing condition correspondence data 71 indicating a relationship between the manufacturing condition and the evaluation result.

In a case where a predetermined amount of manufacturing condition correspondence data 71 is accumulated, the neural network is caused to perform machine learning by deep learning or the like by using the manufacturing condition correspondence data indicating the relationship between the manufacturing condition and the evaluation result to obtain a manufacturing condition model 72, and the manufacturing condition model 72 is stored in the memory 70. The algorithm of machine learning is not limited to deep learning, and a known algorithm such as a support vector machine, a Gaussian process, a decision tree, or a random forest may be used.

After the manufacturing condition model 72 is obtained, the processor 61 performs pleating by driving and controlling each portion of the machining device 60 so as to realize a machining device control amount grasped by inputting, into the manufacturing condition model 72, the setting data of the interval u in the upper-lower direction between the upper folding plate 45 and the lower folding plate 46 corresponding to the pleat height b of the pleated body, the physical property data of the sheet-shaped material 30 to be machined, the information of the degree of winding tendency grasped by the roll unit 69, the temperature information grasped by the temperature sensor 63, and the humidity information grasped by the humidity sensor 64 which are received by the reception unit 65. The machining device control amount includes the interval s in the upper-lower direction when the upper surface of the lower folding plate 46 and the lower end of the upper folding blade 43 are closest to each other, the interval t in the upper-lower direction when the lower surface of the upper folding plate 45 and the upper end of the lower folding blade 44 are closest to each other, the application amount of the interval holding portions, and the rotational speed of each roller.

The above processing will be described again with reference to the flow chart of Fig. 17.

In step S31, the processor 61 of the machining device 60 receives, via the reception unit 65, inputs such as the physical property data of the sheet-shaped material 30, the setting data of the interval u in the upper-lower direction between the upper folding plate 45 and the lower folding plate 46 corresponding to the pleat height b of the pleated body, the setting data of the interval s in the upper-lower direction between the upper surface of the lower folding plate 46 and the lower end of the upper folding blade 43, the setting data of the interval t in the upper-lower direction between the lower surface of the upper folding plate 45 and the upper end of the lower folding blade 44, setting data of the application amount of the interval holding portions, the setting data of the rotational speed of each roller, and the physical property data of the sheet-shaped material 30 to be machined. The processor 61 receives the information of the degree of winding tendency grasped by the roll unit 69, the temperature information grasped by the temperature sensor 63, and the humidity information grasped by the humidity sensor 64. As a result, the processor 61 grasps the manufacturing conditions corresponding to the pieces of setting data. The setting data is not limited, and may be a condition empirically grasped for obtaining a desired pleat shape.

In step S32, the processor 61 performs pleating according to the manufacturing conditions grasped in step S31 to obtain the pleated body.

In step S33, the processor 51 of the evaluation information processing apparatus 50 evaluates the pleat shape of the pleated body manufactured under the manufacturing conditions grasped in step S31.

In step S34, the processor 61 of the machining device 60 stores, as the manufacturing condition correspondence data 71, the evaluation result in step S33 sent from the evaluation information processing apparatus 50 and the corresponding manufacturing condition in the memory 70 in association with each other.

In step S35, the processor 61 determines whether or not a predetermined amount or more of data stored as the manufacturing condition correspondence data 71 is accumulated. In a case where a sufficient amount of data is accumulated, the processor 61 proceeds to step S36. In a case where the amount of data is insufficient, the processor 61 returns to step S31 and continues the acquisition of the correspondence data by manufacturing and evaluation.

In step S36, the processor 61 causes the neural network to perform machine learning by deep learning or the like by using a plurality of sets of pieces of data of manufacturing conditions and evaluation results included in the manufacturing condition correspondence data 71 to obtain the manufacturing condition model 72.

In step S37, the processor 61 stores the manufacturing condition model 72 obtained in step S36 in the memory 70.

In step S38, the processor 61 grasps the manufacturing conditions other than the machining device control amount. Specifically, the processor 61 grasps the interval u in the upper-lower direction between the upper folding plate 45 and the lower folding plate 46, the physical property data of the sheet-shaped material 30 to be machined, the information of the degree of winding tendency grasped by the roll unit 69, the temperature information grasped by the temperature sensor 63, and the humidity information grasped by the humidity sensor 64.

In step S39, the processor 61 grasps the manufacturing conditions by inputting the manufacturing conditions other than the machining device control amount obtained in step S38 to the manufacturing condition model 72 obtained in step S36. Pleating is performed according to the obtained manufacturing conditions to obtain the pleated body. The manufacturing conditions specified here are displayed on the display 62.

In step S40, the processor 51 of the evaluation information processing apparatus 50 evaluates the pleat shape of the pleated body manufactured in step S39.

In step S41, the processor 61 of the machining device 60 stores, as the manufacturing condition correspondence data 71, the evaluation result in step S40 sent from the evaluation information processing apparatus 50 and the corresponding manufacturing condition in the memory 70 in association with each other.

In step S42, the processor 61 determines whether or not a predetermined amount or more of data stored as the manufacturing condition correspondence data 71 is accumulated. In a case where a sufficient amount of data is accumulated, the processor 61 proceeds to step S36, and the manufacturing condition model 72 is updated by performing machine learning. In a case where the amount of data is insufficient, the processor 61 returns to step S38, and continues the acquisition of the manufacturing condition correspondence data 71 by manufacturing and evaluation.

As described above, the pleated body is manufactured by using the manufacturing condition determined by the manufacturing condition model, and thus, it is possible to stably manufacture the pleated body having the pleat shape which can be objectively determined to be non-defective while suppressing variation.

It is possible to stably manufacture the pleated body having the pleat shape which can be objectively determined to be non-defective while suppressing the variation by obtaining the manufacturing condition model even in a case where the manufacturing conditions other than the machining device control amount, such as the interval u in the upper-lower direction between the upper folding plate 45 and the lower folding plate 46, the physical property data of the sheet-shaped material 30 to be machined, the information of the degree of winding tendency grasped by the roll unit 69, the temperature information grasped by the temperature sensor 63, and the humidity information grasped by the humidity sensor 64, change.

Among the manufacturing conditions, the setting data of the interval s in the upper-lower direction when the upper surface of the lower folding plate 46 and the lower end of the upper folding blade 43 are closest to each other and the setting data of the interval t in the upper-lower direction when the lower surface of the upper folding plate 45 and the upper end of the lower folding blade 44 are closest to each other were taken as examples, and a scene in which the pleat shape of the obtained pleated body changes in a case where these pieces of setting data were changed was confirmed.

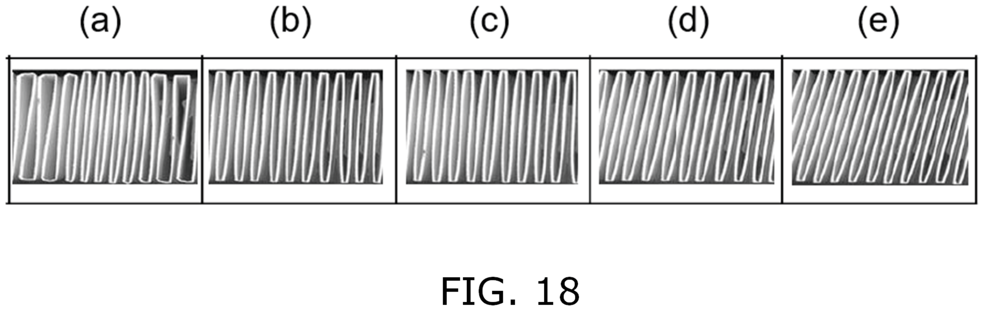

The interval s and the interval t in the manufacturing conditions of one pleated body were set to the same value, and the manufacturing conditions were changed such that the interval s and the interval t had a relationship of (a) < (b) < (c) < (d) < (e), and pleated bodies (a), (b), (c), (d), and (e) illustrated in Fig. 18 were obtained.

As is clear from Fig. 18, it was confirmed that there is a correlation between the interval s and the interval t, and the pleat shape of the pleated body.

While the embodiments of the present disclosure have been described above, it will be understood that various changes in form and detail may be made without departing from the spirit and scope of the present disclosure as set forth in the claims.

### Reference Signs List

20 pleated body
26, 27, 28, 29 interval holding portion
30 sheet-shaped material
35 coupling portion
56 image data
59 evaluation model
62 display (output device)
a pleat pitch
b pleat height
c length of coupling portion in second direction

### Citation List

### Patent Literature

PTL 1: Japanese Unexamined Patent Application Publication No. 2016-026870

## Claims

1. A method for evaluating a pleat shape of a pleated body (20) obtained by machining a sheet-shaped material (30) into a pleat shape, the method comprising:
an extraction step of extracting a feature amount related to the pleat shape from image data (56) of the pleated body (20); and
an evaluation step of evaluating the pleat shape based on the feature amount extracted in the extraction step.

2. The evaluation method according to claim 1, wherein the pleated body is a filter medium.

3. The evaluation method according to claim 1 or 2, wherein the evaluation step includes a step of comparing the feature amount extracted in the extraction step with a predetermined reference.

4. The evaluation method according to any one of claims 1 to 3, wherein the feature amount is any one of
a pleat pitch (a),
a pleat height (b),
a length (c) of each of coupling portions (35), in a second direction, that couple mountains and valleys adjacent to each other as viewed in a first direction in a case where a direction in which a folding line extends is defined as the first direction, a direction in which the pleat shape continues is defined as the second direction, and a direction perpendicular to both the first direction and the second direction is defined as a third direction,
a bending degree of each of the coupling portions as viewed in the first direction,
symmetry between the coupling portions adjacent to each other as viewed in the first direction,
a length and a width of an interval holding portion in a case where the interval holding portion (26, 27, 28, 29) for holding a pleat interval is provided in the pleated body, and
a combination thereof.

5. The evaluation method according to any one of claims 1 to 4, further comprising: an evaluation model learning step of creating an evaluation model (59) by performing machine learning of a relationship between the image data of the pleated body and evaluated data associated with the image data of the pleated body by using a plurality of sets of pieces of the image data of the pleated body and pieces of evaluated data, wherein
in the evaluation step, the feature amount extracted in the extraction step is evaluated based on the evaluation model created in the evaluation model learning step.

6. The evaluation method according to any one of claims 1 to 5, further comprising: an input condition learning step of learning a relationship between an input condition and evaluation result data by using a plurality of sets of the input conditions including machining condition data input to a machining device for machining the sheet-shaped material into the pleat shape and physical property data related to the sheet-shaped material, and pieces of the evaluation result data obtained by evaluating the pleated body obtained to correspond to the input condition in the evaluation step.

7. The evaluation method according to claim 6, wherein the machining condition data includes any one of an interval amount between a folding blade and a folding plate included in the machining device, a conveyance speed when the machining device conveys the material, an application amount in a case where resin for forming an interval holding portion is applied to the material, and a combination thereof.

8. The evaluation method according to claim 6 or 7, wherein an output device (62) is caused to output the input condition, based on a model obtained in the input condition learning step.

9. A manufacturing method for manufacturing the pleated body by using the input condition output in the evaluation method according to claim 8.
